# EUROPÄISCHE PATENTANMELDUNG

(11) **EP 2 030 697 A2**
(43) Veröffentlichungstag der Anmeldung: **04.03.2009**
(21) Anmeldenummer: 08162457.9
(22) Anmeldetag: 15.08.2008
(51) Int. Cl.: B05D 1/26

(54) **Verfahren zur Herstellung einer Beschichtung auf einem Träger und Presswerkzeug oder Gegenwerkzeug**

(30) Priorität: 29.08.2007 DE 102007042193
(71) Anmelder: Deutsches Zentrum für Luft- und Raumfahrt e.V., 51147 Köln (DE)
(72) Erfinder: Kaz, Till, 70186 Stuttgart (DE); Wagner, Norbert, 71065, Sindelfingen (DE); Seybold, Ingeborg, 70197, Stuttgart (DE)
(74) Vertreter: Hoeger, Stellrecht & Partner Patentanwälte

(57) **Zusammenfassung**

Es wird ein Verfahren zur Herstellung einer Beschichtung auf einem Träger vorgeschlagen, bei dem ein Presswerkzeug mindestens in einem Pressbereich aus dem Beschichtungsmaterial hergestellt wird und das Presswerkzeug mit dem Pressbereich auf den Träger gepresst wird.

## Beschreibung

Die Erfindung betrifft ein Verfahren zur Herstellung einer Beschichtung auf einem Träger.

Weiterhin betrifft die Erfindung ein Presswerkzeug oder ein Gegenwerkzeug.

Aus der DE 197 57 492 A1 ist ein Verfahren zur Herstellung von Funktionsschichten für Brennstoffzellen bekannt, bei dem ein Elektrodenmaterial auf einer Trägerbahn aufgetragen und fixiert wird. Das Elektrodenmaterial wird dabei zu feinen trockenen Pulverpartikeln zerkleinert und zwischenlagerungsfrei in einen Gasstrom eingetragen. Die trockenen Pulverpartikel werden mittels des Gasstroms beschleunigt und die beschleunigten Pulverpartikel werden aus dem Gasstrom aufgrund ihrer Massenträgheit im Bereich einer Umlenkung des Gasstroms ausgetragen und auf der Trägerbahn als Pulverschicht deponiert.

Aus der DE 10 2004 018 118 A1 ist eine Druckvorrichtung zur nasschemischen Erzeugung dünner Filme auf einem Substrat bekannt. Es ist eine mit einem Reservoir in Verbindung stehende poröse keramische oder gläserne Stempelplatte vorgesehen, welche derart angeordnet ist, dass Flüssigkeit durch die Poren der Stempelplatte aus dem Reservoir austreten kann und die Poren der Stempelplatte sind durch lokale Verglasung in mindestens einem Bereich lokal verschlossen.

Aus der DE 101 29 099 A1 ist ein Verfahren zur Herstellung eines beschichteten, strukturierten Wärmetauscherblechs für einen Reaktor in einem Brennstoffzellensystem bekannt, wobei eine katalytische Komponente in mindestens einer Schicht in kontinuierlicher oder diskontinuierlicher Weise mittels Tampondruck ausschließlich in die Vertiefungen und/oder Flanken des Wärmetauscherblechs aufgebracht wird.

Aus der DE 199 10 773 A1 ist ein Verfahren zum Aufbringen von Elektrodenschichten auf eine bandförmige Primärelektrolytmembran in einem gewünschten Muster bekannt, bei dem Vorderseite und Rückseite an der Membran kontinuierlich im gewünschten Muster mit den Elektrodenschichten unter Verwendung einer einen Elektrokatalysator enthaltenden Tinte bedruckt und die aufgedruckten Elektrodenschichten unmittelbar nach dem Druckvorgang bei erhöhter Temperatur getrocknet werden, wobei das Bedrucken unter Einhaltung einer positionsgenauen Anordnung der Muster die Elektrodenschichten von Vorderseite und Rückseite zueinander erfolgt.

Aus der JP 2002260678 A ist ein Herstellungsverfahren einer Matrixschicht für eine Phosphorsäure-Brennstoffzelle bekannt, bei dem die Matrixlage durch Aufbringung einer Paste hergestellt wird.

Aus der US 2005/0167866 A1 ist ein Verfahren zur Bearbeitung von dünnen Filmen bekannt.

Pulverbeschichtungsverfahren, bei denen das Pulver trocken aufgesprüht wird, haben grundsätzlich das Problem des Oversprays; Beschichtungsmaterial, das nicht auf dem Träger haftet, geht verloren und muss mit relativ großem Aufwand zurückgewonnen werden.

Nasschemische Beschichtungsverfahren haben den Nachteil, dass ein Lösungsmittel ausgetrieben werden muss, was unter anderem zu einem erhöhten Prozessaufwand führt.

Der Erfindung liegt die Aufgabe zugrunde, ein Verfahren zur Herstellung einer Beschichtung auf einem Träger bereitzustellen, welches auf einfache Weise durchführbar ist.

Diese Aufgabe wird erfindungsgemäß dadurch gelöst, dass ein Presswerkzeug mindestens in einem Pressbereich aus dem Beschichtungsmaterial hergestellt wird und das Presswerkzeug mit dem Pressbereich auf den Träger gepresst wird.

Bei der erfindungsgemäßen Lösung stellt das Presswerkzeug selber das Beschichtungsmaterial bereit. Das Presswerkzeug lässt sich als Materialblock ausbilden. Es bewirkt einerseits die Presskraft auf den Träger und andererseits ist es die Beschichtungsmaterialquelle für den Träger.

Wenn die Adhäsionskräfte des Beschichtungsmaterials am Presswerkzeug geringer sind als die Adhäsionskräfte zu dem Träger, lässt sich die Beschichtung herstellen. Diese lässt sich dann dünn und gleichmäßig ausbilden.

Weiterhin lassen sich Eigenschaften des Beschichtungsmaterials räumlich variieren, wenn das Presswerkzeug mit entsprechend räumlich variierender Zusammensetzung hergestellt wird.

Das Presswerkzeug ist die Beschichtungsmaterialquelle für den Träger. Dies bedeutet, dass bei der Durchführung des erfindungsgemäßen Verfahrens aufgrund des entsprechenden Materialverlusts am Presswerkzeug dessen Dicke abnimmt.

Durch das erfindungsgemäße Verfahren lässt sich eine Beschichtung staubfrei und lösungsmittelfrei herstellen.

Das Presswerkzeug kann je nach Anwendung durch ein Vollmaterial nichtporös oder durch ein poröses Material hergestellt sein.

Vorteilhaft ist es, wenn bei dem Pressvorgang der Träger zwischen einem Gegenwerkzeug und dem Presswerkzeug angeordnet ist. Das Gegenwerkzeug ist ein Ambosswerkzeug, welches es ermöglicht, dass eine Presskraft auf die Oberfläche des Trägers ausgeübt wird.

Es kann dabei vorgesehen sein, dass das Gegenwerkzeug mindestens in einem Anpressbereich aus dem Beschichtungsmaterial hergestellt wird. Dadurch lassen sich auf gegenüberliegenden Oberflächen des Trägers Beschichtungen herstellen.

Ganz besonders vorteilhaft ist es, wenn der Träger und/oder das Presswerkzeug und/oder ein Gegenwerkzeug geheizt wird. Dadurch lässt sich durch Ausübung eines entsprechend großen Druckes auf einfache Weise eine Beschichtung herstellen. Eine erhitzte und insbesondere fließende Oberfläche des Trägers erlaubt beispielsweise ein Eindringen des Trägermaterials in einen Oberflächenbereich des Presswerkzeugs. Dadurch lassen sich die Kräfte, welche zur Ablösung des Beschichtungsmaterials an dem Presswerkzeug führen, vergrößern.

Insbesondere wird der Träger und/oder das Presswerkzeug und/oder das Gegenwerkzeug so weit geheizt, dass der Träger mindestens in einem Oberflächenbereich in einen fließenden Zustand versetzt wird. Dadurch wird die Haftung des Beschichtungsmaterials vom Presswerkzeug an dem Träger verbessert.

Bei dem erfindungsgemäßen Verfahren ist es möglich, den Pressvorgang in einer Reinraumumgebung durchzuführen, da die Beschichtungsherstellung absolut staubfrei und lösungsmittelfrei durchführbar ist. Dadurch kann eine Beschichtung mit vorteilhaften Eigenschaften hergestellt werden bzw. es lassen sich Materialien verwenden und Herstellparameter verwenden, welche nur in einer Reinraumumgebung möglich sind.

Beispielsweise wird das Presswerkzeug mit räumlich variierender Zusammensetzung hergestellt. Dadurch lassen sich räumlich variierende Eigenschaften der hergestellten Beschichtung einstellen.

Beispielsweise variiert die Zusammensetzung des Presswerkzeugs in mindestens einer Richtung parallel zum Träger und/oder in einer Richtung quer (und insbesondere senkrecht) zum Träger.

Es kann beispielsweise vorgesehen sein, dass das Presswerkzeug als Stempel ausgebildet ist bzw. Teil eines Stempels ist.

Es ist beispielsweise auch möglich, dass das Presswerkzeug als Walze oder Walzenbereich ausgebildet ist.

Insbesondere wird das Presswerkzeug als kompakter Materialblock hergestellt, welcher beispielsweise als Stempel oder Walzenbereich aufpressbar ist, um die Beschichtung herzustellen.

Es hat sich als günstig erwiesen, wenn das Presswerkzeug durch Verdichten eines Pulvermaterials hergestellt wird. Es können dabei mehrere Verdichtungsschritte vorgesehen werden; beispielsweise wird ein Pulvermaterial in eine Form gefüllt, es wird ein Verdichtungsvorgang durchgeführt, es wird Pulvermaterial nachgeführt, es wird ein weiterer Verdichtungsvorgang durchgeführt, usw.

Vorteilhafterweise wird das Presswerkzeug durch Kaltverpressen hergestellt. Es lässt sich dadurch erreichen, dass keine Pulverversinterung erfolgt. Durch eine Pulverversinterung sind die Adhäsionskräfte des Beschichtungsmaterials an dem Presswerkzeug unter Umständen zu hoch, um eine Ablösung zur Schichtherstellung zu ermöglichen.

Grundsätzlich wird ein Abbild der Beschichtungszusammensetzung an dem Presswerkzeug erzeugt. Dies kann dadurch erfolgen, dass das Presswerkzeug entsprechend durch unterschiedliche Materialien oder dergleichen hergestellt wird. Es ist alternativ oder zusätzlich auch möglich, dass das Presswerkzeug mit einem Beschichtungsmaterialadditiv in einem Oberflächenbereich des Pressbereichs imprägniert wird. Dadurch lässt sich das Beschichtungsmaterialadditiv in den Oberflächenbereich einbringen und beim Pressvorgang auf den Träger aufbringen. Das Beschichtungsmaterialadditiv kann beispielsweise auf ein Vorkörper-Presswerkzeug aufgesprüht werden und beispielsweise durch Erhitzung oder dergleichen verfestigt werden. Wenn beispielsweise das Vorkörper-Presswerkzeug porös ist, lässt sich das Beschichtungsadditiv in den Poren einlagern. Es ist beispielsweise auch möglich, dass die Imprägnierung über Eintauchen des Vorkörper-Presswerkzeugs in Beschichtungsmaterialadditiv hergestellt wird.

Günstig ist es, wenn das Presswerkzeug mit einer Porosität hergestellt wird. Bei einem Pressvorgang lässt sich dann Trägermaterial, welches insbesondere in einen fließenden Zustand gebracht wird, in das Presswerkzeug einbringen. Dadurch lässt sich die Ablösung des Beschichtungsmaterials von dem Presswerkzeug zur Herstellung der Beschichtung verbessern.

Bei einem Ausführungsbeispiel ist der Träger eine Membran. Es ist beispielsweise auch möglich, dass der Träger aus einem Papiermaterial oder dergleichen hergestellt ist.

Insbesondere im Zusammenhang mit elektrochemischen Funktionsschichten ist es günstig, wenn der Träger aus einem Polymermaterial hergestellt wird.

Durch die erfindungsgemäße Lösung lassen sich beispielsweise elektrochemische Funktionsschichten für Brennstoffzellen, Gaselektroden, Reaktoren, Reformer, Batterien und dergleichen herstellen.

Insbesondere ist dann das Beschichtungsmaterial oder eine Komponente des Beschichtungsmaterials Katalysatormaterial. Dadurch lässt sich eine Elektrodenschicht herstellen. Das Katalysatormaterial kann geträgert oder ungeträgert sein.

Es ist auch günstig, wenn das Beschichtungsmaterial oder eine Komponente des Beschichtungsmaterials ein Tetrafluorethylen-Polymer (PTFE) ist.

Es kann auch vorgesehen sein, dass das Beschichtungsmaterial oder eine Komponente des Beschichtungsmaterials sulfoniertes Tetrafluorethylen-Polymer ist. Sulfoniertes Tetrafluorethylen-Polymer lässt sich als Elektrolyt einsetzen. Es lässt sich dadurch beispielsweise eine elektrochemische Funktionsschicht mit Elektrolyteigenschaften und Katalysatoreigenschaften herstellen.

Beispielsweise wird das sulfonierte Tetrafluorethylen in das Presswerkzeug durch oberflächennahe Imprägnierung eingebracht. Dadurch lässt sich ein Beschichtungsmaterialadditiv mit Elektrolytfunktion auf einfache Weise "integrieren". Die Imprägnierung erfolgt beispielsweise durch Aufsprühen auf ein Presswerkzeug, welches aus geträgertem oder ungeträgertem Katalysatormaterial und eventuell PTFE hergestellt ist.

Es ist auch möglich, dass das Beschichtungsmaterial oder eine Komponente des Beschichtungsmaterials Graphit ist. Beispielsweise lässt sich dadurch eine Graphitschicht als Gleitschicht herstellen.

Durch das erfindungsgemäße Verfahren lassen sich insbesondere Beschichtungen mit einer Dicke beispielsweise kleiner 20 µm herstellen. Die Schichten lassen sich dünn mit homogener Dicke herstellen.

Der Erfindung liegt ferner die Aufgabe zugrunde, ein Presswerkzeug oder Gegenwerkzeug zur Herstellung einer Beschichtung auf einem Träger bereitzustellen.

Diese Aufgabe wird erfindungsgemäß dadurch gelöst, dass das Presswerkzeug oder Gegenwerkzeug mindestens in dem Anpressbereich aus dem Beschichtungsmaterial hergestellt ist.

Das erfindungsgemäße Presswerkzeug oder Gegenwerkzeug weist die bereits im Zusammenhang mit dem erfindungsgemäßen Beschichtungsverfahren erläuterten Vorteile auf.

Das erfindungsgemäße Presswerkzeug oder Gegenwerkzeug ist beispielsweise als Stempel ausgebildet oder als Walze bzw. Walzenbereich ausgebildet.

Es weist insbesondere mindestens in dem Anpressbereich eine Porosität auf, um ein Eindringen von fließendem Trägermaterial zu ermöglichen.

Es kann vorgesehen sein, dass das Presswerkzeug oder Gegenwerkzeug eine Imprägnierung mit einem Additiv in einem oberflächennahen Bereich aufweist. Durch eine solche Imprägnierung lässt sich auf einfache Weise eine Beschichtung mit "integriertem" Additiv herstellen.

Die nachfolgende Beschreibung bevorzugter Ausführungsformen dient im Zusammenhang mit den Zeichnungen der näheren Erläuterung der Erfindung.

Es zeigen:
- Figuren 1 (a) bis (d): schematisch Zwischenschritte zur Herstellung eines Ausführungsbeispiels eines erfindungsgemäßen Presswerkzeugs;
- Figur 2: schematisch einen Herstellungsvorgang zur Her- stellung einer Beschichtung auf einem Träger;
- Figur 3: schematisch eine Draufsicht auf die hergestellte Beschichtung; und
- Figur 4: schematisch ein weiteres Ausführungsbeispiel eines Presswerkzeugs und Gegenwerkzeugs (in Walzen- form).

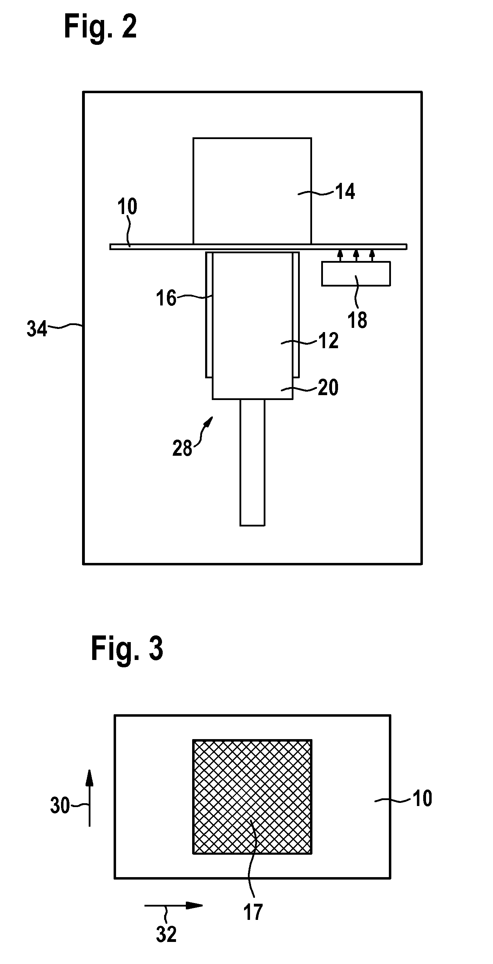

Bei einem Ausführungsbeispiel des erfindungsgemäßen Verfahrens wird, wie in Figur 2 schematisch gezeigt, auf einem Träger 10 mittels eines Presswerkzeugs 12 und einem Gegenwerkzeug 14 (Ambosswerkzeug) eine (dünne) Beschichtung 17 (Figur 3) hergestellt. Der Träger 10 ist dabei bei einem Pressvorgang zwischen dem Presswerkzeug 12 und dem Gegenwerkzeug 14 angeordnet.

Das Presswerkzeug 12 und gegebenenfalls auch das Gegenwerkzeug 14 ist mindestens in einem Pressbereich 16 (Anpressbereich) aus dem Beschichtungsmaterial der herzustellenden Schicht hergestellt. Wenn über das Gegenwerkzeug die Beschichtung hergestellt werden soll, dann ist das Gegenwerkzeug auch ein Presswerkzeug. Das erfindungsgemäße Verfahren ist durchführbar, wenn beim Pressvorgang die Adhäsionskräfte für Beschichtungsmaterial an dem Presswerkzeug 12 kleiner sind als die Adhäsionskräfte für Beschichtungsmaterial bezüglich des Trägers 10, so dass sich Beschichtungsmaterial vom Presswerkzeug 12 ablösen kann und auf den Träger 10 übertragen werden kann.

Es kann dabei günstig sein, wenn zur Beschichtung der Träger 10 und/oder das Presswerkzeug 12 und/oder das Gegenwerkzeug 14 beheizt wird. In Figur 2 ist dazu eine entsprechende Heizeinrichtung 18 angedeutet. Insbesondere wird der Träger 10 mindestens in einem Oberflächenbereich, auf dem die Beschichtung hergestellt werden soll, in einen fließenden Zustand gebracht.

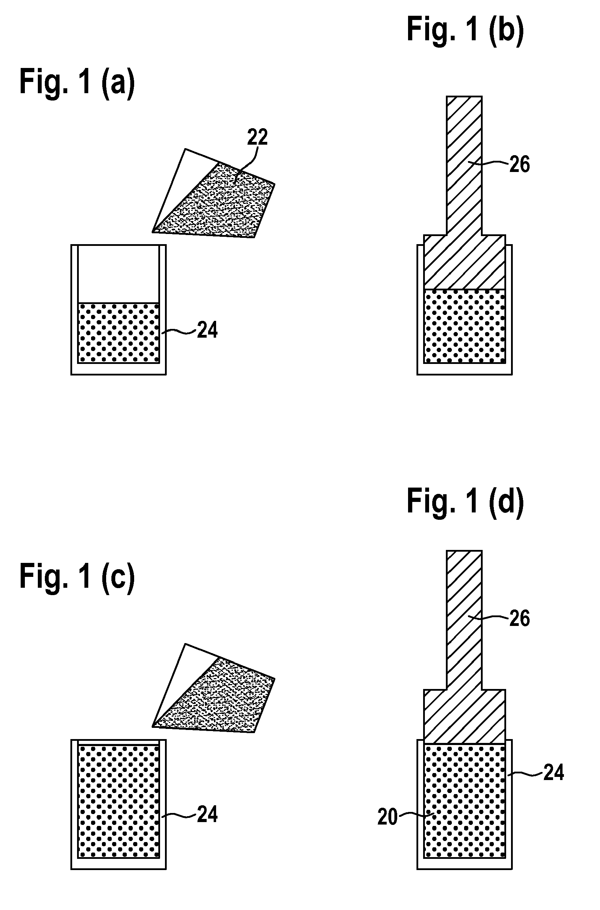

Das Presswerkzeug 12 ist ein Materialblock 20 aus dem Beschichtungs-material. Dieser Materialblock 20 wird, wie in den Figuren 1 (a) bis 1 (d) schematisch gezeigt, durch Verpressung eines Pulvermaterials 22 hergestellt.

Es wird zunächst schüttbares Pulvermaterial 22 in eine Form 24 gefüllt (Figur 1 (a)) und dort mit einem Stempel 26 verpresst (Figur 1 (b)). Dieser Vorgang wird insbesondere mehrfach wiederholt (Figuren 1 (c) und (d)), das heißt, es erfolgt eine Befüllung mit Pulvermaterial 22 und Verpressung über den Stempel 26, weitere Befüllung und Verpressung usw.

Als Ergebnis erhält man den Materialblock 20, welcher das Presswerkzeug 12 oder einen Teil des Presswerkzeugs 12 bildet.

Die Verpressung des Pulvermaterials 22 in der Form 24 über den Stempel 26 erfolgt vorzugsweise "kalt". Die Kaltverpressung wird so durchgeführt, dass keine Sinterung des Pulvermaterials in der Form 24 erfolgen kann.

Der Materialblock 20 ist vorzugsweise porös. Dadurch kann bei einem Pressvorgang, wenn der Träger 10 mindestens in dem Oberflächenbereich, auf dem die Beschichtung 17 hergestellt werden soll, oberflächlich in den Materialblock 20 eindringen, um die Beschichtung herzustellen.

Die Beschichtung 17 wird insbesondere in einem Dickenbereich unterhalb 20 µm hergestellt und insbesondere mit einer Dicke hergestellt, welche in einem Bereich zwischen 1 µm und 15 µm liegt.

Es ist dabei grundsätzlich möglich, dass auch das Gegenwerkzeug 14 ein Materialblock aus dem Beschichtungsmaterial ist, um auf beiden Seiten des Trägers 10 eine Beschichtung herzustellen.

Bei der Herstellung der Beschichtung 17 wird der Materialblock 20 und damit das Presswerkzeug 12 beispielsweise als Stempel 28 (Figur 2) eingesetzt, welcher in einer Richtung quer zu Erstreckungsrichtungen 30, 32 des Trägers gegen das Gegenwerkzeug 14 zugestellt wird.

Der Pressvorgang lässt sich in einem Reinraum 34 durchführen, da sich das Beschichtungsmaterial direkt von dem Presswerkzeug 12 ablöst und an dem Träger 10 haften bleibt, ohne dass Pulverfeinstaub oder dergleichen entsteht. Insbesondere entsteht kein "Overspray" von Material, das nicht auf dem Träger 10 haftet. Es ist dadurch eine staubfreie und lösungsmittelfreie Herstellung der Beschichtung 17 möglich und dadurch eben ein Reinraum 34 nutzbar.

Es ist dabei möglich, dass der Materialblock 20 des Presswerkzeugs 12 mit räumlich variierender Zusammensetzung hergestellt wird. Die Variation kann beispielsweise in mindestens einer Richtung parallel zum Träger 10 erfolgten (beispielsweise in den Richtungen 30 und 32) und/oder in einer Querrichtung zu dem Träger 10. Es lassen sich dadurch räumlich variierende Eigenschaften der Beschichtung 17 herstellen.

Es kann vorgesehen sein, dass das Presswerkzeug 12 oberflächennah an dem Pressbereich 16 imprägniert ist. Dadurch lässt sich ein Beschichtungsmaterialadditiv in das Presswerkzeug 12 "einbauen". Die Imprägnierung erfolgt beispielsweise durch Aufsprühen des Beschichtungsmaterialadditivs und anschließendem Erhitzen. Bei einem Pressvorgang lässt sich dann die Beschichtung mit Beschichtungsmaterialadditiv herstellen.

Der Materialblock 20 verliert durch Pressvorgänge Material, welches auf den Träger 10 übertragen wird. Dementsprechend nimmt die Dicke des Presswerkzeugs 12 ab und dieses muss nach einer bestimmten Anzahl von Pressvorgängen ersetzt werden.

Der Träger 10 ist beispielsweise eine Membran und insbesondere Polymermembran. Die Beschichtung 17 wird beispielsweise als elektrochemische Funktionsschicht hergestellt. Beispielsweise handelt es sich bei der elektrochemischen Funktionsschicht um eine Elektrodenschicht einer Polymer-Elektrolyt-Membran-Brennstoffzelle oder um eine andere Funktionsschicht einer Brennstoffzelle. Auch die Herstellung einer elektrochemischen Funktionsschicht für eine Brennstoffzelle mit einer Flüssigkeit wie Methanol oder Ethanol als Brennstoff ist möglich. Beispielsweise kann die Beschichtung 17 auch eine elektrochemische Schicht eines Batteriesystems sein oder die elektrochemische Schicht eines Reaktors oder Reformers.

Als Beschichtungsmaterial wird für eine elektrochemische Schicht eine Mischung aus geträgertem oder ungeträgertem Katalysatormaterial und Tetrafluorethylen-Polymer und/oder sulfoniertes Tetrafluorethylen-Polymer eingesetzt. Ein sulfoniertes Tetrafluorethylen-Polymer ist auch unter dem Namen "NAFION" bekannt (NAFION ist eine eingetragene Marke der E.I. du Pont de Nemours & Co., Wilmington, USA). Sulfoniertes Tetrafluorethylen-Polymer wirkt als Elektrolyt. Es lässt sich dadurch eine Beschichtung herstellen, welche Katalysatormaterial und Elektrolyt umfasst.

Bei einer Ausführungsform wird das sulfonierte Tetrafluorethylen-Polymer auf die Oberfläche des Presswerkzeugs aufgesprüht und es wird insbesondere anschließend erhitzt. Dadurch wird eine oberflächennahe Schicht an dem Presswerkzeug 12 bereitgestellt, in welche sulfoniertes Tetrafluorethylen-Polymer eingelagert ist. Dieses "integrierte" Beschichtungsmaterialadditiv lässt sich dann bei der Pressbeschichtung auf den Träger 10 aufbringen.

Es ist beispielsweise auch möglich, dass als Beschichtungsmaterial Graphit eingesetzt wird. Es lässt sich dadurch beispielsweise ein Gleitfilm auf einem Träger, welcher beispielsweise aus einem Papiermaterial oder einem Kunststoffmaterial hergestellt ist, herstellen.

Allgemein lassen sich dünne Schichten auf einem Träger herstellen.

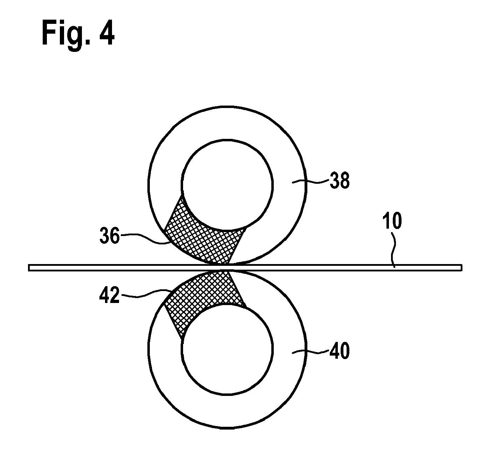

Es ist beispielsweise auch möglich, wie in Figur 4 angedeutet, dass ein Presswerkzeug 36 eine Walze oder Teil einer Walze 38 ist, wobei der Träger 10 zwischen einer Gegenwalze 40 und der Walze 38 durchgeführt wird. Das Presswerkzeug 36 ist wiederum ein Materialblock, welcher durch Verpressung, beispielsweise eines Pulvermaterials, hergestellt wird, und an der Walze 38 angeordnet wird. Wenn die Walze 38 im Bereich des Presswerkzeugs 36 eine Druckkraft auf den Träger 10 ausübt, lässt sich auf diesem die Beschichtung herstellen.

Die Gegenwalze 40 kann ebenfalls einen Bereich 42 aus dem Beschichtungs-material umfassen, um eine Beschichtung auf der dem Presswerkzeug 36 abgewandten Seite herzustellen. Bei der Verfahrensdurchführung ist die Relation der Walze 38 und der Gegenwalze 40 so aufeinander abgestimmt, dass gleichzeitig auf beiden Seiten des Trägers die entsprechende Beschichtung hergestellt wird.

Durch das erfindungsgemäße Verfahren, bei dem das Presswerkzeug mindestens in einem Pressbereich aus dem Beschichtungsmaterial hergestellt ist, lassen sich dünne und gleichmäßige Beschichtungen 17 erreichen, ohne dass ein Lösungsmitteleinsatz wie bei nasschemischen Verfahren notwendig ist, oder Beschichtungsmaterial als Pulver-Overspray verloren geht.

## Patentansprüche

1. Verfahren zur Herstellung einer Beschichtung auf einem Träger, bei dem ein Presswerkzeug mindestens in einem Pressbereich aus dem Beschichtungsmaterial hergestellt wird und das Presswerkzeug mit dem Pressbereich auf den Träger gepresst wird.

2. Verfahren nach Anspruch 1, **dadurch gekennzeichnet, dass** bei dem Pressvorgang der Träger zwischen einem Gegenwerkzeug und dem Presswerkzeug angeordnet wird, wobei das Gegenwerkzeug mindestens in einem Anpressbereich aus dem Beschichtungs-material hergestellt wird.

3. Verfahren nach Anspruch 1 oder 2, **dadurch gekennzeichnet, dass** der Träger und/oder das Presswerkzeug und/oder das Gegenwerkzeug so weit geheizt wird, dass der Träger mindestens in einem Oberflächenbereich in einen fließenden Zustand versetzt wird.

4. Verfahren nach einem der vorangehenden Ansprüche, **dadurch gekennzeichnet, dass** der Pressvorgang in einer Reinraumumgebung durchgeführt wird.

5. Verfahren nach einem der vorangehenden Ansprüche, **dadurch gekennzeichnet, dass** das Presswerkzeug mit räumlich variierender Zusammensetzung hergestellt wird.

6. Verfahren nach einem der vorangehenden Ansprüche, **dadurch gekennzeichnet, dass** das Presswerkzeug als kompakter Materialblock hergestellt wird und insbesondere durch Verdichten eines Pulvermaterials hergestellt wird.

7. Verfahren nach einem der vorangehenden Ansprüche, **dadurch gekennzeichnet, dass** das Presswerkzeug mit einem Beschichtungsmaterialadditiv in einem Oberflächenbereich des Pressbereichs imprägniert wird.

8. Verfahren nach einem der vorangehenden Ansprüche, **dadurch gekennzeichnet, dass** das Presswerkzeug mit einer Porosität hergestellt wird.

9. Verfahren nach einem der vorangehenden Ansprüche, **dadurch gekennzeichnet, dass** das Beschichtungsmaterial oder eine Komponente des Beschichtungsmaterials Katalysatormaterial ist oder ein Tetrafluorethylen-Polymer ist oder sulfoniertes Tetrafluorethylen-Polymer ist oder Graphit ist.

10. Verfahren nach einem der vorangehenden Ansprüche, **dadurch gekennzeichnet, dass** die Beschichtung eine Gleitschicht ist.

11. Verfahren nach einem der vorangehenden Ansprüche, **dadurch gekennzeichnet, dass** die Beschichtung eine Dicke kleiner 20 µm aufweist.

12. Presswerkzeug oder Gegenwerkzeug zur Herstellung einer Beschichtung auf einem Träger (10), welches mindestens in einem Anpressbereich (16) aus dem Beschichtungsmaterial hergestellt ist.

13. Presswerkzeug oder Gegenwerkzeug nach Anspruch 12, **gekennzeichnet durch** eine Ausbildung als Stempel (28) oder als Walze (38) oder Bereich einer Walze.

14. Presswerkzeug oder Gegenwerkzeug nach Anspruch 12 oder 13, **gekennzeichnet durch** eine Porosität mindestens im Anpressbereich (16).

15. Presswerkzeug oder Gegenwerkzeug nach einem der Ansprüche 12 bis 14, **gekennzeichnet durch** eine Ausbildung als Materialblock (20) mindestens am Anpressbereich (16).
